# EUROPÄISCHE PATENTSCHRIFT

(11) **EP 1 716 490 B1**
(45) Veröffentlichungstag und Bekanntmachung des Hinweises auf die Patenterteilung: **23.08.2017**
(21) Anmeldenummer: 04732624.4
(22) Anmeldetag: 13.05.2004
(51) Int. Cl.: G06F 11/34, G06F 11/36

(54) **EINRICHTUNG UND VERFAHREN ZUR ANALYSE VON EINGEBETTETEN SYSTEMEN FÜR SICHERHEITSKRITISCHE RECHNERSYSTEME IN KRAFTFAHRZEUGEN**
METHOD AND DEVICE FOR ANALYZING INTEGRATED SYSTEMS FOR CRITICAL SAFETY COMPUTING SYSTEMS IN MOTOR VEHICLES
PROCEDE ET DISPOSITIF D'ANALYSE DE SYSTEMES INTEGRES POUR DES SYSTEMES DE CALCUL A SECURITE CRITIQUE DANS DES VEHICULES

(30) Priorität: 09.02.2004 DE 102004006437
(43) Veröffentlichungstag der Anmeldung: 02.11.2006
(73) Patentinhaber: Continental Teves AG & Co. oHG, 60488 Frankfurt (DE)
(72) Erfinder: VOSS, Burkart, 07778 Dorndorf-Steudnitz (DE); TRASKOV, Adrian, 61449 Steinbach (DE); MICHEL, Heiko, 60486 Frankfurt (DE)
(74) Vertreter: Brand, Markus
(86) Internationale Anmeldenummer: PCT/EP2004/050803
(87) Internationale Veröffentlichungsnummer: WO 2005/078586

(56) Entgegenhaltungen:
- EP-A- 0 495 254
- US-A- 6 026 501
- US-A- 6 142 683
- US-A1- 2003 018 929
- US-B1- 6 684 348
- O'KEEFFE H ET AL: "EINHEITLICHE DEBUG-SCHNITTSTELLE DER ZUKUNFT DER NEXUS-STANDARD SOLL DIE KOMMUNIKATION ZWISCHEN EMULATOR UND PROZESSOR VEREINHEITLICHEN" ELEKTRONIK, WEKA FACHZEITSCHRIFTENVERLAG, POING, DE, Bd. 49, Nr. 18, 5. September 2000 (2000-09-05), Seiten 124-128, XP001107530 ISSN: 0013-5658

## Beschreibung

Die Erfindung betrifft eine Analyseeinrichtung gemäß Oberbegriff von Anspruch 1, dessen Verwendung gemäß Anspruch 5 sowie ein Verfahren gemäß Oberbegriff von Anspruch 8.

Um Software für eingebettete Systeme erfolgreich entwickeln zu können, ist es allgemein üblich, Einrichtungen vorzusehen, mit denen eine Fehlererkennung zur Laufzeit (Debugging) erfolgen kann. Gemäß einem bereits bekannten Konzept zur Fehlererkennung während der Laufzeit (Debugging) in eingebetteten Systemen wird über einer sogenannte JTAG-Schnittstelle (Joint Test Action Group, IEEE Standard 1149.1-1990, "IEEE Standard Test Access Port and Boundary Scan Architecture", Institute of Electrical and Electronics Engineers Inc., New York, USA, 1990) eine Verbindung zu einem externen Analysesystem hergestellt. Mit Hilfe dieser Analyseschnittstelle lassen sich verschiedene Prüfoperationen durch ein "Boundary-Scan"-Testverfahren, wie unter anderem Einzelschrittverarbeitung des Prozessors (Singlestepping), Setzen von Haltepunkten (Breakpoints) und Setzen von sogenannten "Watchpoints" durchführen. Durch diese an sich bekannten Hilfsmittel zur Fehlererkennung ist es zwar prinzipiell möglich, die Abarbeitung des Programms einschließlich dem Zustand von ausgewählten Variablenwerten mitzuverfolgen, jedoch muss das laufende System dazu in der Regel angehalten werden. Ein Anhalten des zu analysierenden Mikrorechners ist jedoch bei den erfindungsgemäß bevorzugt vorgesehenen Regelungsaufgaben in einem elektronisch geregelten Kraftfahrzeugbremssystem praktisch nicht möglich.

Zur Fehlererkennung in eingebetteten Systemen ist weiterhin im Anwendungsfall von Kfz-Bremssystemen bekannt, ein sogenanntes Trace-Interface einzusetzen, welches unter Benutzung eines sogenannten "bond out"-Chips zur Echtzeitanalyse die Weiterleitung aller relevanten CPU-Bussignale (Adressen-, Daten-, und Kontrollsignale) über Gehäusepins zum Beispiel an eine externe Logikanalyseeinrichtung erlauben. Bei einem "bond out"-Chip handelt es sich um einen Microcontroller (MCU), bei dem der Prozessorbus (Daten-, Adressen- und Kontrollsignale) aus dem Gehäuseinneren nach außen gebondet ist.

Bei den heute für eingebettete Systeme üblichen hohen Systemfrequenzen weit über 100 MHz und den modernen Speicherarchitekturen mit schnellen, prozessornahen Zwischenspeichern (Caches) kann diese Methode zur Fehleranalyse auf Grund der hohen Geschwindigkeitsanforderungen nicht mehr verwendet werden. Eine Echtzeitausgabe relativ großer Datenspeicher (zum Beispiel einer Größe von mehr als 100 kByte) ist in der Regel durch die auf Grund der verwendeten Technologie vorgegebenen Systemfrequenzen und der sich daraus ergebenden Bandbreite nicht möglich. Eine denkbare Möglichkeit zur Schaffung der für die Echtzeitdatenübertragung notwendigen Bandbreite wäre eine parallele Ausgabe der zu übertragenden Daten. Die hierfür bei einer technischen Realisierung zur Verfügung stehenden elektrischen Anschlusspins sind jedoch nicht zuletzt aus Kostengründen in der Regel auf eine bestimmte vorgegebene Anzahl begrenzt.

Es besteht daher immer noch die Aufgabe, eine Analyseeinrichtung für eingebettete Systeme zur Verfügung zu stellen, welche auch bei den heute üblichen schnellen eingebetteten Systemen eingesetzt werden kann.

Zur Lösung dieser Aufgabe wird in der unveröffentlichten älteren internationalen Patentanmeldung PCT/EP 03/12630 eine Analyseeinrichtung für ein eingebettetes System vorgeschlagen, welches eine CPU, einen CPU-Bus und einen Speicher umfasst. Die angemeldete Analyseeinrichtung weist zumindest ein Kommunikationsmodul für die Ein- bzw. Ausgabe von Analysedaten über eine Testschnittstelle auf. Die angemeldete Analyseeinrichtung ist so eingerichtet, dass mit dem Kommunikationsmodul ohne Verbrauch von Taktzyklen der CPU der interne Speicher und I/O-Zugriffe des eingebetteten Systems überwacht und/oder protokolliert werden kann.

Dieser Ansatz basiert auf folgenden Überlegungen: Zum einen lässt sich der interne Systemzustand eines eingebetteten Systems durch seinen aktuellen Datenspeicherinhalt (RAM) beschreiben bzw. analysieren. Daraus folgt, dass für den Fall, dass dieser Speicherinhalt in Echtzeit in einen externen Datenspeicher kopiert werden kann, eine Möglichkeit besteht, den Systemzustand von dort durch eine nachgeschaltete Auswerteeinheit weiterzuverarbeiten und auszuwerten.

Des Weiteren wird in der US 6.026, 501 ein Datenverarbeitungssystem beschrieben, welches ein Debug-Modul mit Debug-Schnittstelle umfasst, das einen Zugriff eines externen Entwicklungssystems auf die Informationen interner Datenbusse eines Datenprozessors realisiert, wodurch der Systemzustand echtzeitfähig überwacht werden kann. Eine artverwandte Debug-Schnittstelle wird ebenfalls in O'Keeffe H. et al: "Einheitliche Debug-Schnittstelle der Zukunft" Elektronik, Weka Fachzeitschriftenverlag, Poing, DE, Bd. 49, Nr. 18, 5. September 2000, Seiten 124-128, XP001107530 beschrieben.

Die Aufgabe der Erfindung ist es, eine Analyseeinrichtung anzugeben, welche eine einfache Realisierung ermöglicht und kostengünstig herzustellen ist.

Die vorliegende Erfindung beschreibt zur Lösung des vorstehenden Problems eine neue Analyseeinrichtung gemäß Patentanspruch 1.

Mit der vorgeschlagenen Analyseeinrichtung kann beispielsweise eine Kopie des internen Systemzustands in einen externen Speicher in Echtzeit geschrieben werden. Auf diese Weise lässt sich die ordnungsgemäße Funktion des eingebetteten Systems von außen besonders einfach überprüfen.

Durch die in Anspruch 1 vorgeschlagene Analyseeinrichtung und das in Anspruch 8 vorgeschlagene Verfahren ergibt sich der Vorteil eines geringen Verbrauchs von für die Analyse verbrauchten Taktzyklen.

Die Analyseeinrichtung ist dabei vorzugsweise Bestandteil eines eingebetteten Systems, welches insbesondere in elektronischen Steuergeräten für Kraftfahrzeugbremssysteme Verwendung findet. Deshalb ist das Kommunikationsmodul bevorzugt im eingebetteten System integriert. In diesem sind weiterhin bevorzugt die wesentliche Komponenten des Systems, wie z.B. eine oder mehrere CPU's und Speicher, enthalten, welche insbesondere teil- oder vollredundant ausgeführt sind. Hierdurch wird die Betriebssicherheit des eingebetteten Systems erhöht.

Vorzugsweise erfolgt die Protokollierung der Daten nicht in der Weise, dass der gesamte Speicherinhalt oder der Inhalt eines ganzen Speicherbereichs übertragen wird, sondern es werden nur die Veränderungen des Speichers, insbesondere alle Schreibzugriffe der CPU und/oder der Peripherie, übertragen. Auf diese Weise kann eine Verringerung der notwendigen Bandbreite zur Datenausgabe erfolgen.

Weitere bevorzugte Ausführungsformen der Analyseeinrichtung gehen aus den Unteransprüchen 2 bis 4 hervor.

Das System umfasst außerdem vorzugsweise Mittel für die direkte Datenausgabe durch die CPU. Neben diesen Mitteln für die direkte Datenausgabe sind insbesondere Mittel für eine automatische Replizierung der Daten im Hintergrund durch das Analysemodul vorgesehen. Hierdurch ergibt sich der Vorteil einer erhöhten Flexibilität bei der Datenausgabe.

Speziell für diese Anwendungsfälle wird gemäß der Erfindung das beschriebene universelle Datenein- und Ausgabemodul vorgeschlagen, welches in der Weise eingerichtet ist, dass in Echtzeit ein Datenaustausch mit einem eingebetteten System durchgeführt werden kann, ohne dass dieses insbesondere nicht einmal kurzzeitig angehalten werden muss (nonintrusive).

Gegenüber den aus dem Stand der Technik bekannten Software-Fehlererkennungseinrichtungen besitzt die Hardware-Analyseeinrichtung nach der Erfindung den Vorteil, dass bei der Entwicklung von Regelalgorithmen z. B. für Kraftfahrzeugbremssystemen, das dynamische Systemverhalten insbesondere der Regelvariablen verfolgt werden kann. Weiterhin ist vorteilhaft, dass für den Einsatz eines eingebetteten Systems in einem Hardware-in-the-Loop Simulator oder in einem Rapid-Prototyping System eine Dateneingabe in das eingebettete System vorgenommen werden kann.

Die Erfindung betrifft weiterhin ein eingebettetes System, welches zumindest eine Zentralrecheneinheit und einen Speicher umfasst, wobei dieses durch eine Analyseeinrichtung gekennzeichnet ist, welche weiter oben beschrieben ist. Die Erfindung bezieht sich daher auch auf die Verwendung einer solchen Analyseeinrichtung in diesen eingebetteten Systemen.

Neben dem eingebetteten System umfasst die erfindungsgemäße Lösung auch ein integriertes Mikroprozessorsystem für Kraftfahrzeuge mit mindestens zwei Prozessorkernen (CPU's), welches dadurch gekennzeichnet ist, dass mindestens einem der enthaltenen Prozessorkerne eine vollständige Analyseeinrichtung, wie sie weiter oben beschrieben ist, zugeordnet ist. Weiterhin umfasst die Erfindung die Verwendung der obigen Analyseeinrichtung in einem solchen integrierten Mikroprozessorsystem.

Insbesondere ist in diesem Mikroprozessorsystem einem weiteren Prozessorkern eine unvollständige Analyseeinrichtung zugeordnet, welche gegenüber der vollständigen, weiter oben beschriebenen, Analyseeinrichtung einen reduzierten Funktionsumfang besitzt.

In dem beschriebenen Mikroprozessorsystem ist bevorzugt eine erste Signalverbindung zum Anhalten des ersten Kerns und eine weitere redundante Signalverbindung zum Anhalten des weiteren redundanten Prozessorkerns vorhanden.

Dabei ist insbesondere die erste Signalverbindung mit der ersten Analyseeinrichtung verbunden und die zweite redundante Signalverbindung mit der unvollständigen Analyseeinrichtung verbunden.

In dem vorstehend beschriebenen Mikroprozessorsystem besteht die Reduktion des Funktionsumfangs bevorzugt darin, dass der in der Analyseeinrichtung vorhandene Pufferspeicher eine geringere Wortbreite hat.

Eine weitere Reduktion des Funktionsumfangs wird bevorzugt dadurch erzielt, dass die Testschnittstelle nicht nach außen geführt oder nicht vorhanden ist.

Außerdem betrifft die Erfindung ein Verfahren zur Analyse eines dem weiter oben beschriebenen eingebetteten System mit einer Analyseeinrichtung, wie sie weiter oben beschrieben wurde, bei dem zur Übertragung der Daten über die Testschnittstelle ein Datenübertragungsprotokoll verwendet wird und bei dem die Daten in mehreren Gruppen aus Adressen und Daten übertragen werden.

Nach einem bevorzugten Verfahrensschritt wird zunächst
- der Speicherinhalt oder eine entsprechend auswertbare Information des eingebetteten Systems ganz oder teilweise in einen externen Speicher in Echtzeit kopiert, wobei insbesondere zuvor die Daten gepuffert werden, und/oder
- der Speicherinhalt des externen Speichers oder eine entsprechend auswertbare Information über den Speicherinhalt des externen Speichers ganz oder teilweise in einen Speicher des eingebetteten Systems in Echtzeit kopiert wird, wobei insbesondere zuvor die Daten gepuffert werden.

Der externe Speicher wird dabei bevorzugt zur Übertragung von Daten für typische Debugging-Anwendungen verwendet.

Das Verfahren hat den Vorteil, dass die Verarbeitungsgeschwindigkeit des eingebetteten Systems durch die mittels Hardware-Elementen durchgeführten Maßnahmen zur Fehlererkennung nicht verringert wird. Hierdurch ist eine Echtzeitverarbeitung der Daten auch während des Debuggings möglich.

Vorteilhafterweise kann die erfindungsgemäße Analyseeinrichtung nicht nur zur Fehlererkennung verwendet werden, sondern auch zur Entwicklung von kraftfahrzeugspezifischen Software- oder Regelalgorithmen, da eine Beobachtung der Variablen (Regelgrößen) eine besonders einfache Betrachtung und Optimierung der Regelgüte erlaubt.

Das Verfahren gemäß der Erfindung umfasst bevorzugt auch Schritte zur echtzeitfähigen Ausgabe des kompletten Datenspeicherinhalts.

Weiterhin kann in dem eingebetteten Systems zweckmäßigerweise ein Modus vorgesehen sein, in dem alle Schreib- und/oder Lesezugriffe der CPU auf das Kommunikationsmodul umgeleitet werden.

Zusätzlich kann das eingebettete System einen weiteren bevozugten Modus umfassen, in dem nur entweder die Schreibzugriffe oder die Lesezugriffe der CPU auf das Kommunikationsmodul umgeleitet werden, wobei die übrigen Zugriffe der CPU auf den Speicher von der CPU aktiv in den externen Speicher protokolliert werden.

Weitere bevorzugte Ausführungsformen ergeben sich aus den Unteransprüchen und der nachfolgenden Beschreibung der Figuren.

Nachfolgend wird die Erfindung an Hand von Beispielen näher erläutert.

Es zeigen
- Fig. 1: ein eingebettetes System 9 mit einer Analyseeinrichtung 4 gemäß der Erfindung,
- Fig. 2: Beispiele für eine mögliche Pinbelegung und ein Timingdiagramm für eine Testschnittstelle 5, und
- Fig. 3: ein Beispiel für ein redundantes, flächenoptimiertes sicheres Mikroprozessorsystem mit Analyseport.

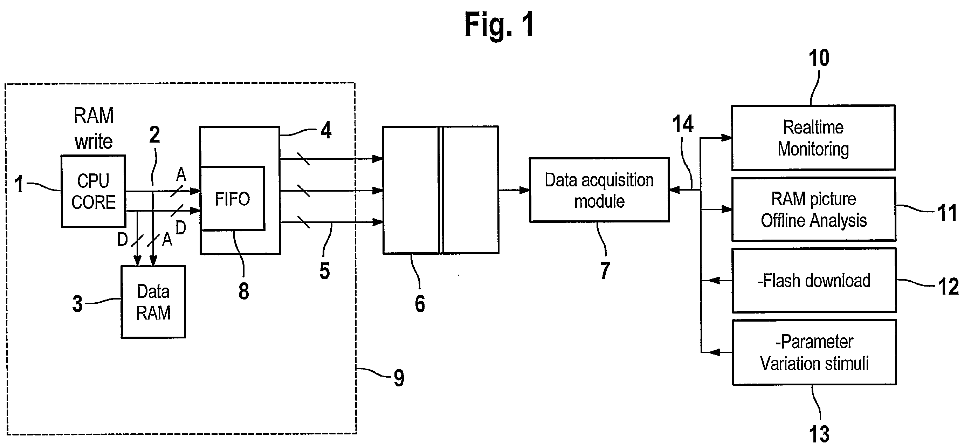

Eingebettetes System 9 in Fig. 1 umfasst einen oder mehrere CPU's 1, einen oder mehrere löschbare Datenspeicher 3 (RAM), eine Analyseeinrichtung 4 und eine Testschnittstelle 5. Zur Vereinfachung des Blockschaltbilds sind weitere übliche Funktionselemente des eingebetteten Systems, wie ROM, Takterzeugung, IO, etc., nicht gezeichnet.

Analyseeinrichtung 4 weist drei Funktionsmodi auf, welche nachfolgend beschrieben werden. Im ersten Funktionsmodus werden alle Schreibzugriffe der CPU 1 auf Datenspeicher 3 automatisch über CPU-Bus 2 von der vorgeschlagenen erweiterten Datenaus-/eingabeeinheit 4 mittels eines darin enthaltenen Controllers bzw. einer Trace-Logik 22, 23 über Testschnittstelle 5 auf den externen Datenspeicher 6 geschrieben. CPU-Bus 2 kann in einem alternativen Beispiel auch entfallen, wenn das eingebettete System ein eng an die CPU gekoppeltes RAM besitzt (tightly coupled RAM), wobei in diesem Fall die Informationen über eine Core-spezifische Schnittstelle ausgelesen werden können. Die Analyseeinrichtung ist damit in der Lage, alle Schreibzugriffe der CPU 1 auf Datenspeicher 3 mitzulesen. Der in Einheit 4 enthaltene Controller besitzt deshalb zumindest die gleiche Bandbreite, wie der verwendete Speicher 3, und erhält über interne Datenleitungen neben den Daten auch Kontroll- und Adressinformationen. Hierdurch kann, entsprechend einer bevorzugten Ausführungsform des Verfahrens, der Controller speziell selektierte Adressbereiche und/oder speziell selektierte Datentypen für die Analyse mitverfolgen. Für den Abgriff der Daten und den Datentransfer muss CPU 1 demzufolge keine zusätzlichen Befehle ausführen. Analyseeinrichtung 4 umfasst ferner einen FIFO-Speicher 8 (First In/First Out), welcher innerhalb der Datenausgabeeinheit 4 angeordnet ist. Dieser sorgt für eine zeitliche Pufferung der abgegriffenen Daten. Auf diese Weise können auch Zugriffe auf Testschnittstelle 5 ausgegeben werden, deren Bandbreite kurzzeitig höher ist, als die Bandbreite der Testschnittstelle 5. Dies kann beispielsweise bei Zugriffen der Fall sein, bei denen ein Zurückschreiben einer Cache-Line oder eines CPU-Register Dump bei Funktionseintritt durchgeführt wird.

Externer Datenspeicher 6 ist bevorzugt als Speicher mit zweifacher Datenschnittstelle (Dual-Port) ausgeführt und enthält in der Regel ein genaues Abbild der in RAM 3 beobachteten Speicherbereiche bzw. des gesamten Speicherinhaltes von RAM 3. Es kann sich bei Speicher 6 auch um einen Ringspeicher handeln, der den ankommenden Datenstrom für eine spätere (offline-) Analyse speichert.

Testschnittstelle 5 ist als modifiziertes paralleles Interface ausgeführt, mit der Besonderheit, dass neben Steuerleitungen Datenleitungen vorhanden sind, die abwechselnd sowohl Adressinformationen als auch Daten übertragen können.

Im zweiten Funktionsmodus werden von Analyseeinrichtung 4 alle Lesezugriffe von CPU 1 auf den Datenspeicher protokolliert. Dieser Modus entspricht weitestgehend dem ersten Funktionsmodus, jedoch sind folgende Unterschiede vorhanden: Alle Lesezugriffe werden automatisch über Testschnittstelle 5 ausgegeben. Analyseeinrichtung 4 registriert dabei alle Vorgänge, wie Lesezyklen, Schreibzyklen etc., die durch das eingebettete System vorgenommen werden (Mitlesen). CPU 1 führt aktiv einen Speicherdump durch, was allerdings mit einem geringfügigen tolerierbaren Laufzeitverlust einhergeht.

Bei der im zweiter Funktionsmodus betriebenen Analyseeinrichtung liest CPU 1 den Datenspeicherinhalt in die CPU-Register. Parallel hierzu gibt die Analyseeinrichtung 4 die entsprechenden Daten automatisch aus, d.h. es ist kein expliziter Schreibzyklus für die Datenausgabe zur Analyse erforderlich.

Im dritten Funktionsmodus erfolgt ein direktes Schreiben auf die Datenausgabeeinheit oder ein direktes Lesen von der Datenausgabeeinheit. Der dritte Funktionsmodus entspricht im wesentlichen dem ersten Funktionsmodus, bis auf die Tatsache, dass die Daten aktiv durch die CPU 1 auf die Analyseeinheit 4 extern ausgegeben bzw. aktiv von dort eingelesen werden, wodurch allerdings zusätzliche Taktzyklen erforderlich sind.

Die Analyseeinheit kann über Modul 7 Daten aus dem externen Speicher 6 an typische Debugging-Anwendungen, wie z.B. Echtzeitüberwachung des Systemzustands 10, Offline-Analyse zur Schaffung eines kompletten Datenspeicherabbilds über Modul 11, Flash-Download über Kommunikationskanal 12 (Programmierung des Programmspeichers), Parametervariation während des Betriebs des eingebetteten Systems, Übertragung von Systemstimuli, Rapid-Prototyping und Hardware-in-the-Loop Simulation übertragen werden.

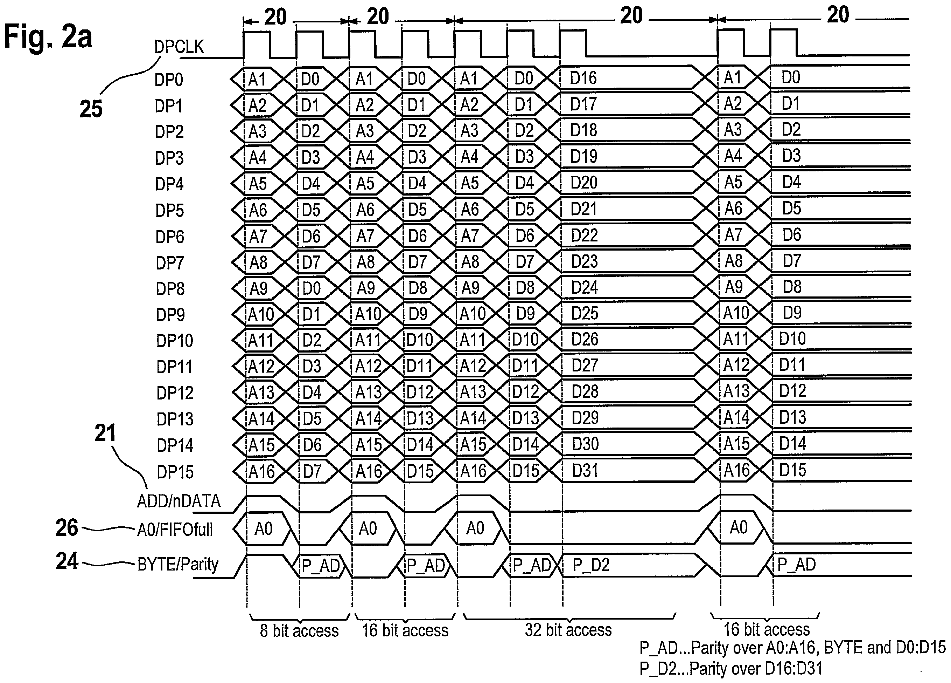

Fig. 2a) zeigt ein Beispiel für eine Pinbelegung und ein Timingdiagramm der Testschnittstelle 5 mit einer Breite des Ports von 16 Bit. Bei einem Schreibzugriff auf RAM 3 wird ein Paket aus Adressen und Daten 20 übertragen, das je nach gewünschter Bandbreite immer aus 16 Adressbits (A1 bis A16), gefolgt von Datenbits D0 bis D7 bzw. D0 bis D15 bzw. D0 bis D31 besteht. Die maximale Datenwortbreite kann die Werte 8, 16, 32, 64 etc. annehmen.

Eine oder mehrere weitere Leitungen können bevorzugt als Leitungen zur Übertragung zusätzlicher Adressbits vorgesehen sein, wenn mehr als 64 KByte adressiert werden sollen. In diesem Fall reichen die dargestellten 16 physikalischen Leitungen DP0 bis DP15 nicht aus, um die erforderliche Anzahl von Adressbits zu übertragen. Eine Verdoppelung des adressierbaren Bereichs ergibt sich jeweils durch einen oder mehrere zusätzliche physikalische Leitungen 26 (Pin A0/FIFOfull) die zusätzliche Adressinformation übertragen. Wegen der beispielgemäß vorgegebenen Portbreite von 16 Pins in Teilbild a) ergibt sich somit ein maximaler Adressraum von 2¹⁷ (128 kByte).

Die Länge der Adress-/Datenphase wird erfindungsgemäß über eine in der Schnittstelle vorhandene Add/nDATA Leitung 21 angezeigt, die beispielsweise während der Adressphase einen logischen "high"-Pegel und während der Datenphase einen "low"-Pegel einnimmt. Damit markiert eine steigende Flanke dieses Signals den Start eines neuen Datenpakets.
Eine weitere Leitung 25 ist bevorzugt vorgesehen, um gültige Daten über eine Flanke des Pins DPCLK anzuzeigen. Dabei kann entweder eine steigende oder auch eine fallende Flanke als maßgebliches Gültigkeitskriterium herangezogen werden.
Im Beispiel des 16-Pin breiten Datenports werden parallel jeweils 16 Bit gleichzeitig übertragen. Zur Realisierung eines Byte-Zugriffs (8-Bit) ist bevorzugt eine zusätzliche Signalleitung 24 (BYTE/Parity) vorgesehen, deren Pegel während der Adressphase einen Bytezugriff signalisiert. Während der Datenphase kann diese Leitung dazu benutzt werden, um ein Paritätsbit zu übertragen.

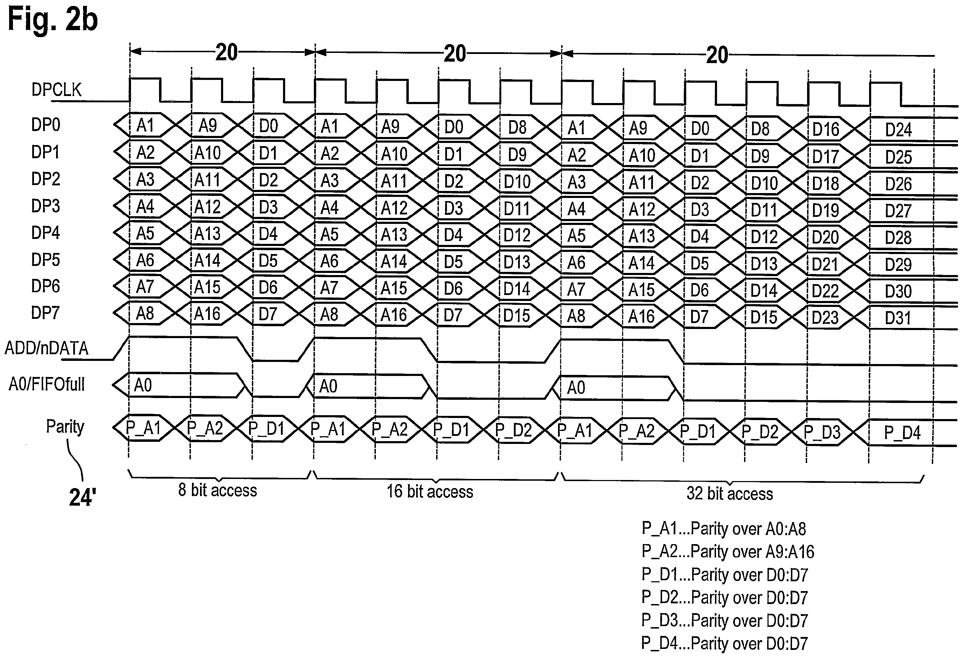

Fig. 2 b) stellt ein weiteres Beispiel für eine Testschnittstelle 5 mit einer Breite von lediglich 8 Bit dar. Gegenüber dem Beispiel in Teilbild a) werden zur Übertragung von Datenworten einer Breite von mehr als 8 Bit eine entsprechend größere Anzahl von Taktzyklen verbraucht. Demgegenüber kann die Byte-Information bei auf Pin 24 bei einem Byte-Zugriff entfallen, so dass über Pin 24' nur ein Paritätsbit übertragen wird.

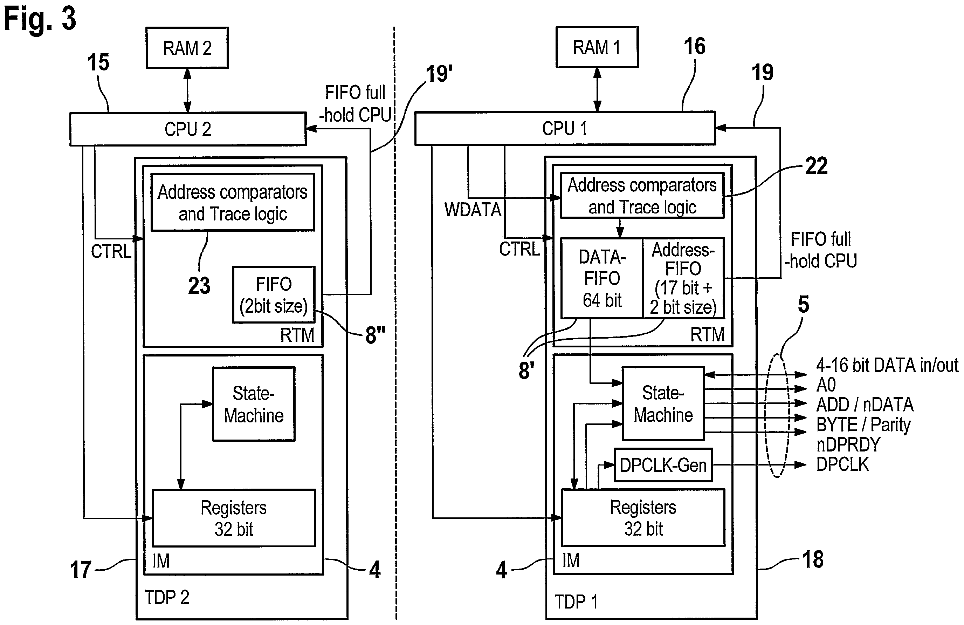

In Fig. 3 ist schematisch ein sicheres Mikroprozessorsystem für Kraftfahrzeuge mit zwei CPU's 15 und 16 und jeweils je einer CPU zugeordneten Analyseeinrichtung 17 und 18 dargestellt. Die Analyseeinrichtung 17 hat gegenüber der Analyseeinrichtung 18 einen verminderten Funktionsumfang und damit Chipflächenbedarf.

Im Falle eines Überlaufs des aus Redundanzgründen zweifach vorhandenen FIFO-Speichers 8' und 8" wird über Signalleitung 19, 19' (zweifach vorhanden) jeweils von den Analyseeinrichtungen 17 und 18 redundant taktsynchron ein Haltesignal erzeugt, welches die CPU's 15 und 16 anhält, bis die FIFO-Speicher 8' und 8" beide jeweils entsprechend weit geleert worden sind. FIFO-Speicher 8" ist nicht vollständig und weist daher lediglich eine Datenbreite von 2 (Zusatz-) Bit(s) auf. Demgegenüber ist FIFO-Speicher 8' mit einer Breite von 17 Adressbits, 64 Datenbits + 2 Zusatzbits ein vollständiger Speicher. Der 2 Bit breite FIFO-Speicher 8", speichert lediglich die Zugriffsbreite des Prozessors. Diese Information wird zur Berechnung der zum Leeren des Daten-FIFO 19 benötigten Taktzyklen benötigt. Das Mikroprozessorsystem besitzt zwei redundante Signalleitungen und Analyseeinrichtungen zum Anhalten der CPU's, damit bei einer Fehlfunktion nur einer Analyseeinrichtung die CPU mit der funktionierenden Analyseeinrichtung weiterlaufen kann. Ein etwaiger Fehler kann zu einem späteren Zeitpunkt durch Vergleich der Rechenergebnisse bzw. wegen des Anhaltens des Rechners als solcher erkannt werden. Das redundante Interface Modul (IM, TDP2) in Analyseeinrichtung 17 überträgt selbst keine Daten. Nur die Logik 22, 23 zum Füllen und Leeren des FIFO-Speichers muss vollständig redundant implementiert sein.

Vorteilhaft ist dabei, dass bei Verwendung der oben beschriebenen mehrkernigen Prozessorarchitektur das Signal zum Anhalten der CPU unter vermindertem Bedarf an Chipfläche mit ausreichender Fehlersicherheit konzipiert werden kann. Die Herstellungskosten werden durch die Verwendung einer teilweise unvollständigen Analyseeinrichtung deutlich gesenkt.

Wie in nachfolgender Tabelle gezeigt ist, zeichnet sich der beispielgemäße Analyseport durch einen besonders geringen Taktzyklenverbrauch aus. In typischen Beispielen ergibt sich eine Reduktion der Laufzeit durch die erfindungsgemäße Testschnittstelle von lediglich etwa 0,5 bis 1 % bezüglich der ursprünglich benötigten Taktzyklenanzahl. In der Tabelle ist die Anzahl der für die Übertragung eines Datenpaktes benötigten Taktzyklen angegeben:

**Tabelle**

| Bitbreite des Ports | Schreib-Zugriffsbreite in Bit | | | |
|---|---|---|---|---|
| | 8 | 16 | 32 | 64 |
| 4 | 6 | 8 | 12 | 20 |
| 8 | 3 | 4 | 6 | 10 |
| 16 | 2 | 2 | 3 | 5 |

## Patentansprüche

1. Analyseeinrichtung für ein eingebettetes System (9), welches mindestens eine CPU (1) und mindestens einen Speicher (3) umfasst, wobei die Analyseeinrichtung eine Testschnittstelle (5), einen außerhalb des eingebetteten Systems (9) angeordneten Prüfspeicher (6) und zumindest ein Kommunikationsmodul (4) für die Ein- und/oder Ausgabe von Analysedaten über die Testschnittstelle (5) aufweist und die Testschnittstelle (5) mit dem Prüfspeicher (6) verbunden ist und Steuerleitungen und mindestens eine Datenleitungsgruppe aufweist, wobei die Datenleitungsgruppe zur Übertragung der Analysedaten ausgestaltet ist und zur Laufzeit der CPU (1) der Inhalt und Zugriffe auf den beschreibbaren internen Speicher (3) sowie Ein- und/oder Ausgabe-Zugriffe des eingebetteten Systems (9) mittels externer Debugging-Anwendungen (10,11,12,13) überwacht und/oder protokolliert werden, **dadurch gekennzeichnet, dass** die Analyseeinrichtung ausgestaltet ist, die Analysedaten über die Testschnittstelle (5) auf den Prüfspeicher (6) zu schreiben, wobei zur Übertragung der Analysedaten ein Datenübertragungsprotokoll verwendet wird, bei dem die Analysedaten in mehreren Gruppen aus Adressinformationen (A1...A16) und Datenworten (D0...D31) übertragen werden und wobei die Information, ob Datenworte (D0...D31) oder Adressinformationen (A1...A16) übertragen werden, über mindestens eine der Steuerleitungen (Add/nDATA) der Testschnittstelle (5) mittels eines Pegels eines Binärsignals übertragen wird.

2. Analyseeinrichtung nach Anspruch 1, **gekennzeichnet durch** mindestens zwei frei wählbare Analysemodi, wobei sich die Analysemodi in Art und Umfang der Beteiligung der CPU (1) beim Einlesen und/oder Schreiben von Daten für Analysezwecke voneinander unterscheiden, und wobei je nach gewähltem Analysemodus die Analyseeinrichtung dazu ausgebildet ist,
- alle Schreibzugriffe der CPU (1) auf insbesondere definierbare Adressbereiche ohne Taktzyklenverbrauch der CPU (1) zu protokollieren oder
- alle Lesezugriffe der CPU (1) zu protokollieren oder
- ein direktes Lesen und Schreiben der CPU (1) aus/in den Prüfspeicher (6) mit Taktzyklenverbrauch der CPU (1) zu ermöglichen.

3. Analyseeinrichtung nach mindestens einem der Ansprüche 1 oder 2, **dadurch gekennzeichnet, dass** das Kommunikationsmodul (4) mit einem Pufferspeicher (8, 8', 8") verbunden ist oder diesen umfasst, wobei in dem Pufferspeicher die bei Schreib- und/oder Lese-Zugriffen übertragenen Analysedaten gespeichert werden können und insbesondere aus dem Pufferspeicher Daten über die Testschnittstelle (5) gepuffert ausgegeben oder Daten in den Pufferspeicher über die Testschnittstelle (5) eingeschrieben werden können.

4. Analyseeinrichtung nach mindestens einem der Ansprüche 1 bis 3, **dadurch gekennzeichnet, dass** der Prüfspeicher (6) mit einer Datenaufbereitungseinrichtung (7) verbunden ist, welche eine Schnittstellenverbindung (14) zu den externen Debugging-Anwendungen (10,11,12,13) schafft.

5. Verwendung der Analyseeinrichtung gemäß mindestens einem der Ansprüche 1 bis 4 in einem integrierten Mikroprozessorsystem für Kraftfahrzeuge mit mindestens zwei Prozessorkernen (15,16), wobei mindestens einem der enthaltenen Prozessorkerne (16) eine vollständige Analyseeinrichtung (18) gemäß mindestens einem der Ansprüche 1 bis 4 zugeordnet ist.

6. Verwendung nach Anspruch 5, **dadurch gekennzeichnet, dass** in dem integrierten Mikroprozessorsystem neben dem ersten Prozessorkernen (16) mit der vollständigen Analyseeinrichtung einem weiteren Prozessorkern (15) eine unvollständige Analyseeinrichtung (17) zugeordnet ist, welche gegenüber der vollständigen Analyseeinrichtung (18) einen reduzierten Funktionsumfang besitzt.

7. Verwendung nach Anspruch 6, **dadurch gekennzeichnet, dass** die Reduktion des Funktionsumfangs darin besteht, dass der in der unvollständigen Analyseeinrichtung vorhandene Pufferspeicher (8") eine geringere Speicherplatzanzahl und/oder Wortbreite hat und/oder die Testschnittstelle (5) nicht nach außen geführt und/oder die Testschnittstelle (5) nicht vorhanden ist.

8. Verfahren zur Analyse eines eingebetteten Systems (9), welches mindestens eine CPU (1) und mindestens einen Speicher (3) umfasst, wobei ein Kommunikationsmodul (4) zur Ein- und/oder Ausgabe von Analysedaten über die Testschnittstelle (5) vorgesehen ist und die Testschnittstelle (5) mit einem außerhalb des eingebetteten Systems (9) angeordneten Prüfspeicher (6) verbunden ist und Steuerleitungen und mindestens eine Datenleitungsgruppe aufweist, wobei die Datenleitungsgruppe zur Übertragung der Analysedaten ausgestaltet ist und zur Laufzeit der CPU (1) der Inhalt und Zugriffe auf den beschreibbaren internen Speicher (3) sowie Ein- und/oder Ausgabe-Zugriffe des eingebetteten Systems mittels Debugging-Anwendungen (10,11,12,13) überwacht und/oder protokolliert werden, **dadurch gekennzeichnet, dass** die Analysedaten über die Testschnittstelle (5) auf den Prüfspeicher (6) geschrieben werden, wobei zur Übertragung der Analysedaten ein Datenübertragungsprotokoll verwendet wird, bei dem die Analysedaten in mehreren Gruppen aus Adressinformationen (A1...A16) und Datenworten (D0...D31) übertragen werden, wobei die Information, ob Datenworte oder Adressinformationen übertragen werden, über mindestens eine der Steuerleitungen (Add/nDATA) der Testschnittstelle (5) mittels eines Pegels eines Binärsignals übertragen wird.

9. Verfahren nach Anspruch 8, **dadurch gekennzeichnet, dass** mindestens ein Modus vorhanden ist, in dem die Analysedaten in Echtzeit aus dem eingebetteten System (9), welches zumindest CPU, Datenspeicher, Programmspeicher und I/O-Element/-e umfasst, herausgelesen und/oder in das eingebetteten System (9) hinein geschrieben werden können, so dass das eingebettete System (9) für die Analyse nicht angehalten oder unterbrochen werden muss.

10. Verfahren nach einem der Ansprüche 8 oder 9 , **dadurch gekennzeichnet, dass**
- der Speicherinhalt des Speichers (3) oder eine entsprechend auswertbare Information des eingebetteten Systems (9) ganz oder teilweise in den Prüfspeicher (6) in Echtzeit kopiert wird, wobei insbesondere zuvor die Daten gepuffert werden, und/oder
- der Speicherinhalt des Prüfspeichers (6) oder eine entsprechend auswertbare Information über den Speicherinhalt von dem Prüfspeicher (6) ganz oder teilweise in den Speicher (3) des eingebetteten Systems (9) in Echtzeit kopiert wird, wobei insbesondere zuvor die Daten gepuffert werden.

11. Verfahren nach mindestens einem der Ansprüche 8 bis 10, **dadurch gekennzeichnet, dass** Informationen über die Schreibzugriffe ohne zusätzliche CPU-Befehle in den Pufferspeicher (8, 8', 8") oder direkt in das Kommunikationsmodul (4) geschrieben werden und die Informationen über die Lesezugriffe mit aktiver Unterstützung der CPU in den Pufferspeicher geschrieben werden.

## Claims

1. Analysis device for an embedded system (9) which comprises at least one CPU (1) and at least one memory (3), the analysis device having a test interface (5), a test memory (6) arranged outside the embedded system (9) and at least one communication module (4) for the input and/or output of analysis data via the test interface (5) and the test interface (5) being connected to the test memory (6) and having control lines and at least one data line group, the data line group being designed for transmitting the analysis data and, at the run time of the CPU (1), the content and accesses to the writeable internal memory (3) and input and/or output accesses of the embedded system (9) being monitored and/or logged by means of external debugging applications (10, 11, 12, 13), **characterized in that** the analysis device is designed to write the analysis data via the test interface (5) to the test memory (6), wherein, for the transmission of the analysis data, a data transmission protocol is used in which the analysis data are transmitted in a number of groups of address information items (A1...A16) and data words (D0...D31) and wherein the information whether data words (D0...D31) or address information (A1...A16) are transmitted is transmitted via at least one of the control lines (Add/nDATA) of the test interface (5) by means of a level of a binary signal.

2. Analysis device according to Claim 1, **characterized by** at least two freely selectable analysis modes, the analysis modes differing in type and extent of involvement of the CPU (1) during reading in and/or writing of data for analysis purposes and the analysis device being designed depending on the selected analysis mode
- to log all write accesses of the CPU (1) to particularly definable address areas without use of clock cycles of the CPU (1) or
- to log all read accesses of the CPU (1)
or
- to provide for direct reading and writing of the CPU (1) from/into the test memory (6) with clock cycle consumption of the CPU (1).

3. Analysis device according to at least one of Claims 1 or 2, **characterized in that** the communication module (4) is connected to a buffer memory (8, 8', 8") or comprises the latter wherein the analysis data transmitted during write and/or read accesses can be stored in the buffer memory and, in particular, data can be output from the buffer memory buffered via the test interface (5) or data can be written into the buffer memory via the test interface (5).

4. Analysis device according to at least one of Claims 1 to 3, **characterized in that** the test memory (6) is connected to a data processing device (7) which creates an interface connection (14) to the external debugging applications (10, 11, 12, 13).

5. Use of the analysis device according to at least one of Claims 1 to 4 in an integrated microprocessor system for motor vehicles having at least two processor cores (15, 16), a complete analysis device (18) according to at least one of Claims 1 to 4 being allocated to at least one of the processor cores (16) contained.

6. Use according to Claim 5, **characterized in that** in the integrated microprocessor system, apart from the first processor cores (16) with the complete analysis device, an incomplete analysis device (17) which has a reduced extent of functions compared with the complete analysis device (18) is allocated to a further processor core (15).

7. Use according to Claim 6, **characterized in that** the reduction of the range of functions consists **in that** the buffer memory (8") present in the incomplete analysis device has a lesser number of memory spaces and/or word width and/or the test interface (5) is not carried to the outside and/or the test interface (5) is not present.

8. Method for the analysis of an embedded system (9) which comprises at least one CPU (1) and at least one memory (3), wherein a communication module (4) is provided for the input and/or output of analysis data via the test interface (5) and the test interface (5) is connected to a test memory (6) arranged outside the embedded system (9) and has control lines and at least one group of data lines, the group of data lines being designed for the transmission of the analysis data and, at the run time of the CPU (1), the content and accesses to the writeable internal memory (3) and input and/or output accesses of the embedded system being monitored and/or logged by means of debugging applications (10, 11, 12, 13), **characterized in that** the analysis data are written to the test memory (6) via the test interface (5), a data transmission protocol being used for transmitting the analysis data in which the analysis data are transmitted in a number of groups of address information (A1...A16) and data words (D0...D31), the information whether data words or address information are transmitted being transmitted via at least one of the control lines (Add/nDATA) of the test interface (5) by means of a level of a binary signal.

9. Method according to Claim 8, **characterized in that** at least one mode is present in which the analysis data can be read out in real time from the embedded system (9) which comprises at least CPU, data memory, program memory and I/O element/s and/or can be written into the embedded system (9) so that the embedded system (9) does not need to be stopped or interrupted for the analysis.

10. Method according to one of Claims 8 or 9, **characterized in that**
- the memory content of the memory (3) or correspondingly evaluable information of the embedded system (9) is copied wholly or partially into the test memory (6) in real time, wherein, in particular, the data are first buffered and/or
- the memory content of the test memory (6) or correspondingly evaluable information about the memory content is copied from the test memory (6) wholly or partially into the memory (3) of the embedded system (9) in real time, wherein, in particular, the data are first buffered.

11. Method according to at least one of Claims 8 to 10, **characterized in that** information about the write accesses is written without additional CPU commands into the buffer memory (8, 8', 8") or directly into the communication module (4) and the information about the read accesses is written into the buffer memory with active support of the CPU.

## Revendications

1. Mécanisme d'analyse pour un système (9) intégré, lequel comprend au moins un processeur (1) et au moins une mémoire (3),
dans lequel le mécanisme d'analyse présente une interface de test (5), une mémoire de contrôle (6), laquelle est disposée à l'extérieur du système (9) intégré, et tout au moins un module de communication (4) pour l'entrée et/ou la sortie de données d'analyse par l'intermédiaire de l'interface de test (5) ; et
dans lequel l'interface de test (5) est reliée à la mémoire de contrôle (6) et présente des lignes de commande et au moins un groupe de lignes de données ; dans lequel le groupe de lignes de données est configuré en vue du transfert des données d'analyse et, en vue de la durée de fonctionnement du processeur (1), le contenu et les accès à la mémoire interne (3) descriptible, ainsi que les accès aux entrées et/ou aux sorties du système (9) intégré sont surveillés et/ou enregistrés sous forme de protocole au moyen d'applications de débogage (10, 11, 12, 13) externes,
**caractérisé en ce que** le mécanisme d'analyse est configuré en vue d'écrire les données d'analyse sur la mémoire de contrôle (6) par l'intermédiaire de l'interface de test (5) ;
dans lequel un protocole de transfert de données est employé en vue du transfert des données d'analyse et pour lequel les données d'analyse sont transférées en plusieurs groupes à partir d'informations d'adresse (A1 ... A16) et de mots de données (D0 ... D31) ; et
dans lequel les informations, qu'il s'agisse du transfert de mots de données (D0 ... D31) ou d'informations d'adresse (A1 ... A16), sont transférées au moyen d'un niveau d'un signal binaire par l'intermédiaire d'au moins l'une des lignes de commande (Add/nDATA) de l'interface de test (5) .

2. Mécanisme d'analyse selon la revendication 1, **caractérisé par** au moins deux modes d'analyse pouvant être sélectionnés librement,
dans lequel les modes d'analyse se distinguent l'un de l'autre de par la nature et l'ampleur de la participation du processeur (1) lors de la lecture et/ou de l'écriture de données à des fins d'analyse ; et
dans lequel le mécanisme d'analyse est conçu, en fonction du mode d'analyse sélectionné, en vue de :
- enregistrer sous forme de protocole tous les accès en écriture du processeur (1) sur des zones d'adresse pouvant être définies en particulier, sans consommation de cycles d'horloge du processeur (1) ; ou
- enregistrer sous forme de protocole tous les accès en lecture du processeur (1) ; ou
- permettre une lecture et une écriture du processeur (1) directement à partir de la mémoire de contrôle (6) ou dans celle-ci, avec une consommation de cycles d'horloge du processeur (1).

3. Mécanisme d'analyse selon au moins l'une des revendications 1 ou 2, **caractérisé en ce que** le module de communication (4) est relié à une mémoire tampon (8, 8', 8") ou comprend celle-ci, dans lequel les données d'analyse qui sont transférées lors des accès en écriture et/ou en lecture peuvent être enregistrées dans la mémoire tampon et en particulier des données peuvent être transférées de manière tamponnée à partir de la mémoire tampon, par l'intermédiaire de l'interface de test (5), ou des données peuvent être inscrites dans la mémoire tampon par l'intermédiaire de l'interface de test (5).

4. Mécanisme d'analyse selon au moins l'une des revendications 1 à 3, **caractérisé en ce que** la mémoire de contrôle (6) est reliée à un mécanisme de préparation des données (7), lequel établit une liaison d'interfaçage (14) avec les applications de débogage (10, 11, 12, 13) externes.

5. Utilisation du mécanisme d'analyse selon au moins l'une des revendications 1 à 4 dans un système à microprocesseur intégré pour des véhicules à moteur, avec au moins deux noyaux de processeur (15, 16), dans laquelle un mécanisme d'analyse (18) complet selon au moins l'une des revendications 1 à 4 est associé à au moins l'un des noyaux de processeur (16) inclus.

6. Utilisation selon la revendication 5, **caractérisée en ce que**, dans le système à microprocesseur intégré, un mécanisme d'analyse (17) incomplet est associé à un autre noyau de processeur (15), à côté du premier noyau de processeur (16) avec le mécanisme d'analyse complet, lequel mécanisme d'analyse incomplet possède une gamme de fonctions réduite par rapport au mécanisme d'analyse (18) complet.

7. Utilisation selon la revendication 6, **caractérisée en ce que** la réduction de la gamme de fonctions consiste **en ce que** la mémoire tampon (8") qui existe dans le mécanisme d'analyse incomplet présente un volume de capacité de la mémoire et/ou une longueur du mot inférieur (e) et/ou **en ce que** l'interface de test (5) n'est pas dirigée vers l'extérieur et/ou l'interface de test (5) n'est pas présente.

8. Procédé destiné à l'analyse d'un système (9) intégré, lequel comprend au moins un processeur (1) et au moins une mémoire (3) ;
dans lequel un module de communication (4) est prévu en vue de l'entrée et/ou de la sortie de données d'analyse par l'intermédiaire de l'interface de test (5) ; et dans lequel l'interface de test (5) est reliée à une mémoire de contrôle (6), laquelle est disposée à l'extérieur du système (9) intégré, et présente des lignes de commande et au moins un groupe de lignes de données ;
dans lequel le groupe de lignes de données est configuré en vue du transfert des données d'analyse et, en vue de la durée de fonctionnement du processeur (1), le contenu et les accès à la mémoire (3) interne descriptible, ainsi que les accès aux entrées et/ou aux sorties du système intégré sont surveillés et/ou enregistrés sous forme de protocole au moyen d'applications de débogage (10, 11, 12, 13) ;
**caractérisé en ce que**
les données d'analyse sont écrites sur la mémoire de contrôle (6) par l'intermédiaire de l'interface de test (5) ;
dans lequel un protocole de transfert de données est employé en vue du transfert des données d'analyse et pour lequel les données d'analyse sont transférées en plusieurs groupes à partir d'informations d'adresse (A1 ... A16) et de mots de données (D0 ... D31) ;
dans lequel les informations, qu'il s'agisse du transfert de mots de données ou d'informations d'adresse, sont transférées au moyen d'un niveau d'un signal binaire par l'intermédiaire d'au moins l'une des lignes de commande (Add/nDATA) de l'interface de test (5).

9. Procédé selon la revendication 8, **caractérisé en ce qu'**il existe au moins un mode, dans lequel les données d'analyse peuvent être lues en temps réel à partir du système (9) intégré, lequel comprend tout au moins un processeur, une mémoire de données, une mémoire de programme et un ou plusieurs éléments d'entrée et de sortie, et/ou peuvent être écrites dans le système (9) intégré, de telle sorte que le système (9) intégré ne doit pas nécessairement être arrêté ou interrompu pour l'analyse.

10. Procédé selon l'une des revendications 8 ou 9, **caractérisé en ce que**
- le contenu stocké dans la mémoire (3) ou des informations pouvant être évaluées en conséquence du système (9) intégré est copié ou sont copiées en temps réel, en intégralité ou en partie, dans la mémoire de contrôle (6), dans lequel, en particulier, les données ont été préalablement mises en mémoire tampon ; et/ou
- le contenu stocké dans la mémoire de contrôles (6) ou des informations pouvant être évaluées en conséquence et relatives au contenu stocké dans la mémoire de contrôle (6) est copié ou sont copiées en temps réel, en intégralité ou en partie, dans la mémoire (3) du système (9) intégré, dans lequel, en particulier, les données ont été préalablement mises en mémoire tampon.

11. Procédé selon au moins l'une des revendications 8 à 10, **caractérisé en ce que** des informations relatives aux accès en écriture sont écrites dans la mémoire tampon (8, 8', 8") ou directement dans le module de communication (4), sans commande supplémentaire du processeur, et les informations relatives aux accès en lecture sont écrites dans la mémoire tampon avec le soutien actif du processeur.
